# EUROPEAN PATENT APPLICATION

(11) **EP 4 663 263 A1**
(43) Date of publication of application: **17.12.2025**
(21) Application number: 25180807.7
(22) Date of filing: 04.06.2025
(51) Int. Cl.: A63F 13/40, G06F 3/023, G06F 3/04842

(54) **INPUT SYSTEM AND METHOD**

(30) Priority: 13.06.2024 GB 202408480
(71) Applicant: Sony Interactive Entertainment Inc., Tokyo 108-0075 (JP)
(72) Inventor: LEUNG, Jun Yen, London, W1F 7LP (GB)
(74) Representative: D Young & Co LLP

(57) **Abstract**

An input system comprises an entertainment device comprising an input processor configured to receive inputs from a handheld controller; wherein the input processor is configured to map only a subset of possible phonemes to respective inputs received from the handheld controller, and wherein the subset of phonemes mapped to the respective inputs differs for different parts of a word or syllable.

## Description

### BACKGROUND OF THE INVENTION

### Field of the invention

The present invention relates to an input system and method.

### Description of the Prior Art

Unlike traditional computers, which have a keyboard as a primary input, most videogame consoles rely on a handheld controller (or occasionally two) as the primary input to the device. For most applications, such as menu navigation and selection, and playing games, this is ideal and allows for a conveniently handheld form factor for the user.

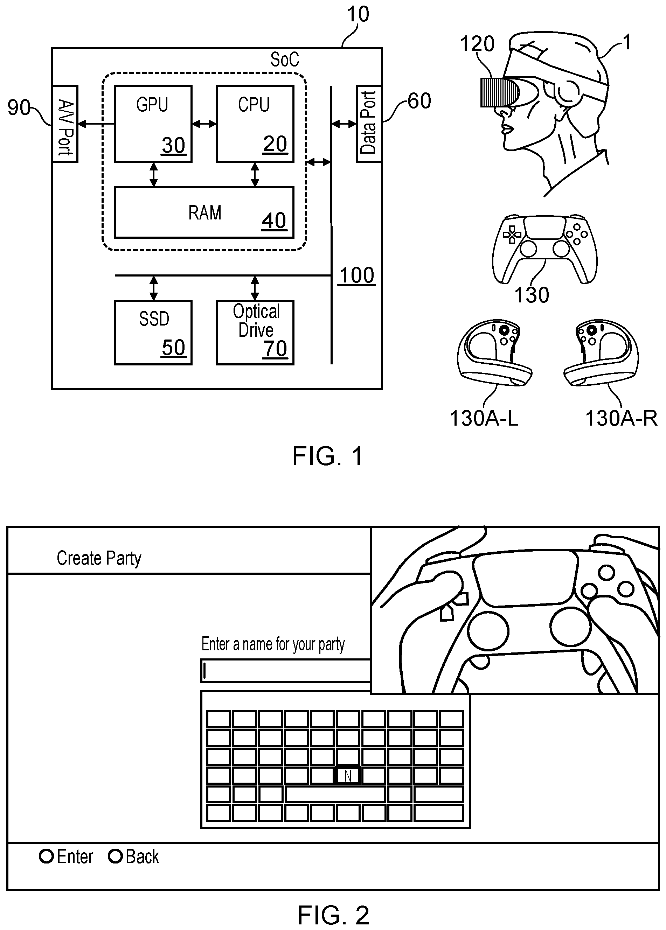

However, on occasion it is necessary to input text - for example when logging into an account. However, in the absence of a physical keyboard, the handheld controller is typically limited to navigating a virtual keyboard, which in effect replicates existing menu navigation to select letters and numbers as seen in Figure 2. This is an inefficient and cumbersome solution, that may be tolerable for occasional short inputs, but is less fit for social interactions within multiplayer environments, for example in order to hold virtual conversations.

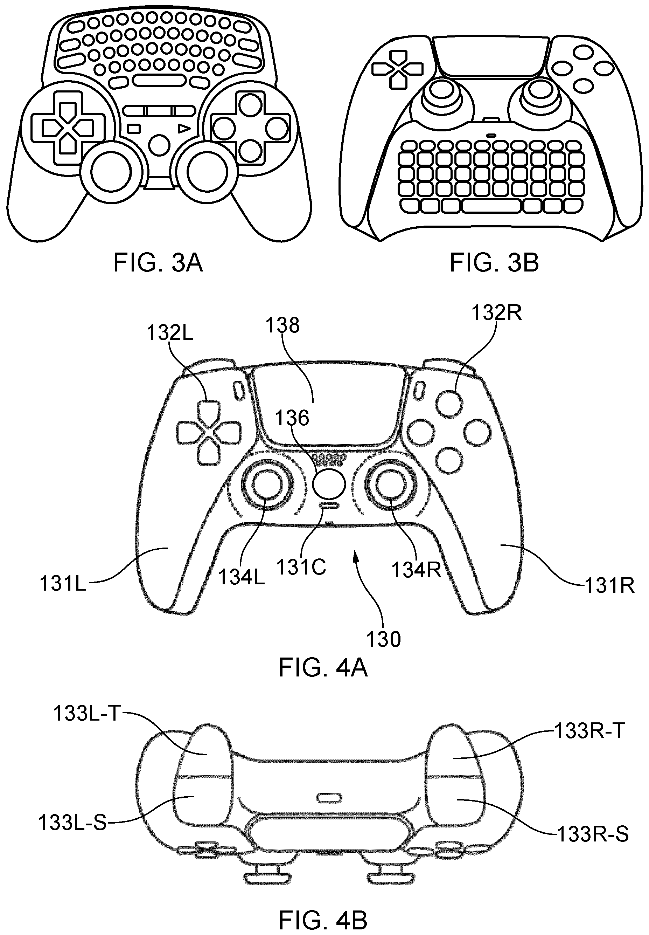

To accommodate this, miniature keyboards have been provided to clip on to handheld controllers. Typically these mini keyboards draw power from the host controller, for example via its USB port. However, in addition to being very small, these keyboards are also ergonomically limited by the existing physical input and structural requirements of the host controller. Hence for example a keyboard may be attached so as to sit above the controller, as in Figure 3A, enabling thumb-based typing. However, if the controller has a touch surface on the upper half of its body, this may not be a viable solution and so the keyboard may have to fit below the main controller body between the handles, as per Figure 3B.

In addition, this represents an additional element of hardware needed to overcome a user interface issue, and also represents an additional drain on the controller battery when the keyboard is not in use, as well as an impact on the balance and ergonomics of the controller itself.

Accordingly, there is a need for an improved input system and method.

Embodiments of the present invention seek to address or mitigate this need.

### SUMMARY OF THE INVENTION

Various aspects and features of the present invention are defined in the appended claims and within the text of the accompanying description.

In a first aspect, an input system is provided in accordance with claim 1.

In another aspect, a method identifying an input is provided in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an input system in accordance with embodiments of the present description.
- Figure 2 is an illustration of a virtual keyboard known in the art.
- Figures 3A and 3B are illustrations of physical mini keyboards known in the art.
- Figures 4A and 4B are schematic views of a handheld controller in accordance with embodiments of the present description.
- Figure 5 is a table of phonemes in accordance with embodiments of the present description.
- Figures 6A-D are schematic diagrams of input maps in accordance with embodiments of the present description.
- Figures 7A and 7B are schematic diagrams of a user interface in accordance with embodiments of the present description.
- Figure 8 is a flow diagram of a method of identifying an input in accordance with embodiments of the present description.

### DESCRIPTION OF THE EMBODIMENTS

An input system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Referring now to the drawings, wherein like reference numerals designate identical or corresponding parts throughout the several views, Figure 1 shows an example of an input system, in the form of an entertainment system 10 such as a computer or console, operating in conjunction with one or more handheld controllers 130, and/or one or more VR controllers (130A-L,R) in the case of an head mounted display 'HMD'.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50.

The entertainment device may transmit or receive data via one or more data ports 60. It may also optionally receive data via an optical drive 70.Audio/visual outputs from the entertainment device are typically provided through one or more A/V ports 90 or one or more of the data ports 60. Where components are not integrated, they may be connected as appropriate either by a dedicated data link or via a bus 100.

An example of a device for displaying images output by the entertainment system is a head mounted display 'HMD' 120, worn by a user 1. Other examples include a television or monitor.

Referring now to Figures 4A and 4B, interaction with the system is typically provided using the handheld controller 130. Such a controller typically has two handle sections 131L,R and a central body 131C. Various controls are distributed over the controller, typically in local groups. Examples include a left button group 132L, which may comprise directional controls, and similarly right button group 132R, which comprise function controls. The controller also includes left and/or right joysticks 134L,R, which may optionally also be operable as buttons by pressing down on them. The controller may also comprise top buttons 133L,R, including shoulder buttons 133L-S,R-S and trigger buttons 133L-T,R-T.

The controller (typically in the central portion of the device) may also comprise one or more system buttons 136, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 138, a light for optical tracking (not shown), a screen (not shown), haptic feedback elements (not shown), and the like. It will be appreciated that whilst the controller of Figures 4A,B is used herein as an example, other controllers such as VR controllers 130AL,R may be similarly considered.

As noted elsewhere herein, traditionally a controller is used to navigate a virtual keyboard when inputting text or alphanumeric data.

In principle, some controllers (including those shown in Figures 4A and 4B) have sufficient inputs to indicate 26 characters (e.g. for the English alphabet); for example each joystick may be used to indicate 8 letters using cardinal and ordinal directions (for a total of 16), the button groups 132L,R can indicate a further 8, and the shoulder buttons the final 2. The right and left trigger buttons could then for example indicate a space and a delete respectively.

However, this would be physically complicated to interact with, and also leaves limited inputs available to select for example between upper and lower case letters, numbers, or punctuation.

It will also be appreciated that some other languages have more characters in their alphabet, or more variations of characters (e.g. with accents), exacerbating this issue.

Accordingly, in embodiments of the present description an alternative input scheme is based on the use of phonemes, so that a user can enter words as they sound phonetically.

This allows for a generalised and common input scheme across multiple languages, as the superset of phonemes are basically the same for all spoken languages.

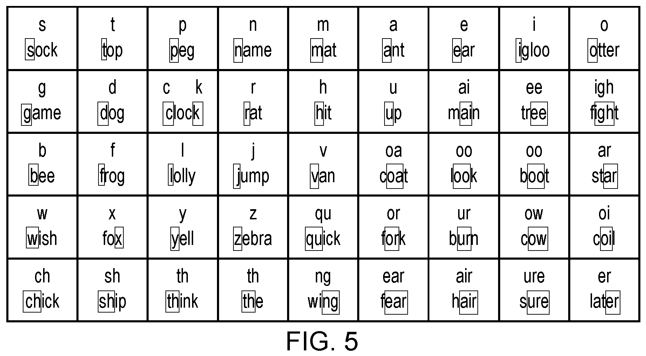

However, as noted above, for a handheld controller there are a limited number of inputs, making for example the selection of 26 letters in an alphabet difficult - meanwhile there are even more phonemes (typically English is considered to have 44 or 45 - see Figure 5), potentially making the problem worse rather than better.

Accordingly, in embodiments of the present description, phoneme inputs are structured based on syllables of words, which typically have a start, middle, and end phoneme-for example the single-syllable word 'car' can be broken up as "k" + "ah" + "r". The three parts can be referred to as the onset, nucleus, and coda. Alternatively or in addition, a syllable can be structured in two parts, as either an onset and rime, or body and coda. An example of this is the word 'event', where the first syllable is in two parts: "air" + "v", whilst the second is in three: "eh" + "n" + "t".

Notably, the distribution, frequency, or probability of phonemes is different for the onset, nucleus, and coda (or onset and rime, or body and coda) of most syllables for most languages. There are also common combinations of phonemes, and common cases where phonemes are not combined.

Consequently the sets of phonemes for each stage of a syllable may be selected from different and wider possible sets of options, particularly for the onset and coda sets.

The selection of these subsets may be based for example on a statistical analysis of words in the relevant language. The analysis may be based on a dictionary-type word selection, but this does not reflect usage frequency and hence probability in use. Accordingly such an analysis may use a corpus of real-world language use.

Optionally the corpus may comprise or consist of existing typed conversations within the context of video game play (for example suitably anonymised, or optionally anonymised to within demographic groups based on age and/or gender), as these are likely to contain a more representative distribution of phonemes for the use-case. Typed text can be mapped to phonemes using heuristics or look-up tables.

The conversations may have been typed using the existing virtual keyboards, and/or may be obtained from players on other platforms such as PC, which have physical keyboards, as this is more likely to be representative of the language users would prefer to use if not limited by the current modes of input. Similarly transcripts of voice chat may be used. A subset of most common phonemes within the corpus for each stage of a syllable may then be determined.

The corpus may be further derived from different usage scenarios, such as different games or game genres, or different modes of use of the entertainment device.

In any event, such a selection for each stage of a syllable effectively reduces the number of phonemes that may need to be represented by controller inputs for each step of a phonetic spelling of a syllable. In other words, the user may be presented with a different subset of phonemes to select from for each part of a syllable that they input with their controller.

Presenting, for example, sixteen phonemes at a time in a UI would allow them to be uniquely indicated by just the two joysticks 134L,R, based on the cardinal and ordinal directions.

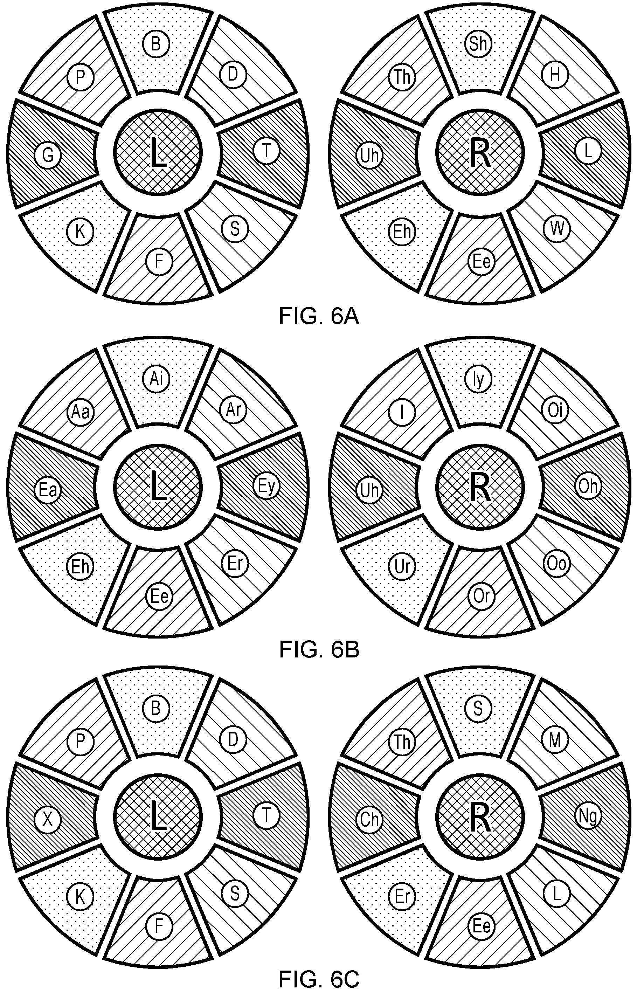

This is illustrated, as a non-limiting example, in Figures 6A-C.

Figure 6A shows a set of 16 onset phonemes. In this non-limiting example plosives and fricatives are on the left joystick, with softer phonemes on the right. Such larger groupings by phoneme type can assist the user to develop muscle memory.

Figure 6B shows a set of 16 nucleus phonemes. In this non-limiting example these are roughly ordered by vowel. Again such grouping helps with muscle memory.

Figure 6C shows a set of 16 coda phonemes. Again in non-limiting example plosives and fricatives are on the left joystick, with softer phonemes on the right. Such larger groupings by phoneme type can assist the user to develop muscle memory.

All the above cases are exemplary only and it may be appreciated that modifications may be considered, and that the phonemes are likely to differ for different languages. It will also be appreciated that a user may choose to configure their own mapping, and so rearrange the phonemes that are provided according to personal preference.

Optionally, the three sets (or more generally, a plurality depending for example on the expected syllable / word structure) could be displayed stacked in parallel in a manner such as that showed by Figures 6A-C together, with a user interface moving between them once a user has selected a phoneme (or opted to skip one, as described elsewhere herein). In this way the user can efficiently select triplets or couplets of phonemes to spell out syllables.

In each case, the letter can be indicated using the joystick, and actually selected using any appropriate mechanism, including holding the joystick in that position for a predetermined period (which may be short), moving the joystick sufficiently in a given direction, pushing down on the joystick (if it has such an input), and/or pressing another button such as a shoulder or trigger button.

It will be further appreciated that if more than 16 phonemes are selected, other buttons may be assigned to the additional phonemes, or in principle the number of one or more joystick directions could be increased, e.g. to point to 9, 10, 11, 12, etc. phoneme options (although this tends to be more difficult for users to accurately control, and 8 directions is preferred).

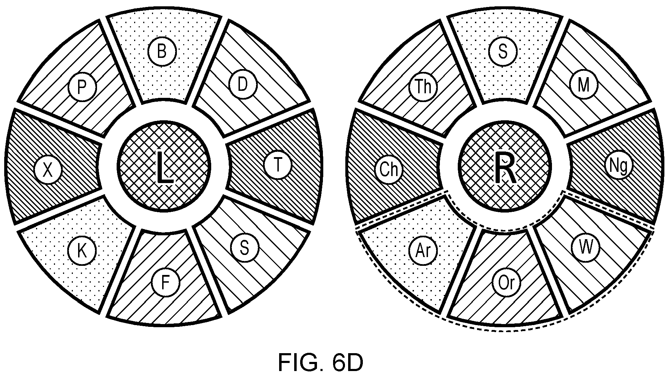

Referring now also to Figure 6D, whilst the phonemes may stay static in relation to the joysticks and/or other inputs of the controller, optionally some or all of them can be updated dynamically.

Hence for example one section of the joystick inputs could be given over to dynamic suggestions of phonemes that are more likely at the current position in a word than those already available elsewhere in the joystick selection; these would replace the existing phonemes within a specific region (denoted in Figure 6D by dotted lines), for example those currently least likely but originally included.

Alternatively or in addition, one or more buttons in one of the other input groups (e.g. 132L,R) could be dynamically allocated to letters, so that the muscle memory for static mappings on the joysticks can remain wholly consistent, although this means the user must disengage from at least one of the joysticks to select a button

In any event, such an approach may also be used based on statistics between phonemes (i.e. predicting most likely next phoneme and including them if not currently available); this prediction may be based on one or more selected from the list consisting of: phoneme pairing probability, phoneme sequence probability within a syllable, phoneme probability (or sequence probability) given a preceding syllable, and phoneme probability (or sequence probability) given a preceding word.

It will be appreciated that a mix of static phoneme and contextual phoneme suggestions advantageously allows for familiarity and muscle memory to develop whilst also increasing the number of available phonemes to select from.

In embodiments of the present description, it is further appreciated that particularly for the onset and coda phonemes, it can be difficult to allocate all the possible phonemes to the intended inputs of the controller, even if using dynamic allocation for some or all of them.

Accordingly, alternatively or in addition to other schemes described herein, optionally phonemes may be dropped if they are homophones, or close homophones, of a selected phoneme. Typically in this case the more common phoneme will be selected, whilst the less common one will be dropped.

Hence for example, one of 'b' and 'p' may be dropped (typically the one that is less probable / less frequent / has a lower predicted likelihood, either statically or dynamically). Similarly one of 'm' and 'n' may be dropped. In some languages, 'l' and 'r' may be considered interchangeable and so one may be dropped, and so on. This provides extra spaces for the next most likely phonemes to be included in the UI, whilst the user can spell out their words using approximate-sounding phoneme choices.

In a similar manner, alternatively or in addition a 'swap' button (e.g. one of the shoulder or trigger buttons) could be used to swap one set of phonemes with most or all of the currently missing phonemes - for example the phonemes associated with the right joystick could be swapped for the next 8 most probable / frequent phonemes. This could be a toggle, or more likely akin to a shift function, only occurring whilst the button was pressed.

A similar swap button scheme could toggle or switch between phoneme sets for syllables starting with a consonant sound, and syllables starting with a vowel sound, for example. In this case one may then end up with phonemes shown in the UI element of Figure 6B occurring in the UI element of Figure 6A, and vice-versa.

Likewise a similar swap function could be provided to indicate an intention to use upper or lower case, or to switch to numbers or symbols. For example pressing the left joystick down in the neutral/central position could summon numbers and associated symbols such as £, $, %, =, and the like, and pressing it again could revert to the phonemes. Similarly pressing the right joystick down in the neutral/central position could summon other symbols such as the @, ?, !, and other functional / grammatical symbols or accented letters.

Such swap functions could alternatively or in addition be assigned to function keys on the controller (for example keys marked with a triangle, square, circle, or cross, or marked with the letters X, Y, A, or B, or shoulder/trigger buttons).

It was noted previously herein that syllables may have three parts or two parts. Accordingly the UI may optionally also allow the user to skip input to one or more of the input rings, so as to only input two or one phoneme for a syllable. Hence for example for the word 'ever', the user may select 'Eh' from the UI element of Figure 6A, and then skip twice (or use an input to indicate a syllable is complete, such as a trigger), end then input 'F', 'Ur', and skip (or end) for the second syllable, to produce two syllables ('Eh') + ('F'+'Ur') approximating the word, where neither syllable has three phonemes. The 'skip' input could also be optionally considered as 'null' phoneme for processing, if required.

There are also some syllables that are more complex, such as the one-syllable word 'warmth', or the use of 's' in English to denote plurals, such as for 'cats'. In these cases, users can artificially break the syllable up into run-on parts, for example to produce ('W'+'Or'+'M') + ('Th' & end) for 'warmth' and ('K'+'Aa'+'T') + ('S' & end) for 'cats', with the UI sequencing through a three-part syllable structure of Figures 6A-C as normal, except where skipped/ended.

Alternatively or in addition, the user could indicate a desire to input two phonemes from one UI element, e.g. using a shoulder or trigger button, so that 'M' and 'Th', or 'T' and 'S' are both input via the UI element of Figure 6C as an extended phoneme sequence for one syllable.

It will be appreciated that the techniques herein thus beneficially assist with efficient input of text, albeit phonetically. For example the word 'cats' can be input just by pointing the left joystick in 4 directions to identify 'K'+'Aa'+'T'+'S' in successive UI elements, and similarly the word 'warmth' can be input just by pointing the right joystick in 4 directions to identify 'W'+'Or'+'M'+'Th' in successive UI elements.

Hence more generally the techniques herein may apply to words and/or syllables, since at least in some circumstances the terms are interchangeable.

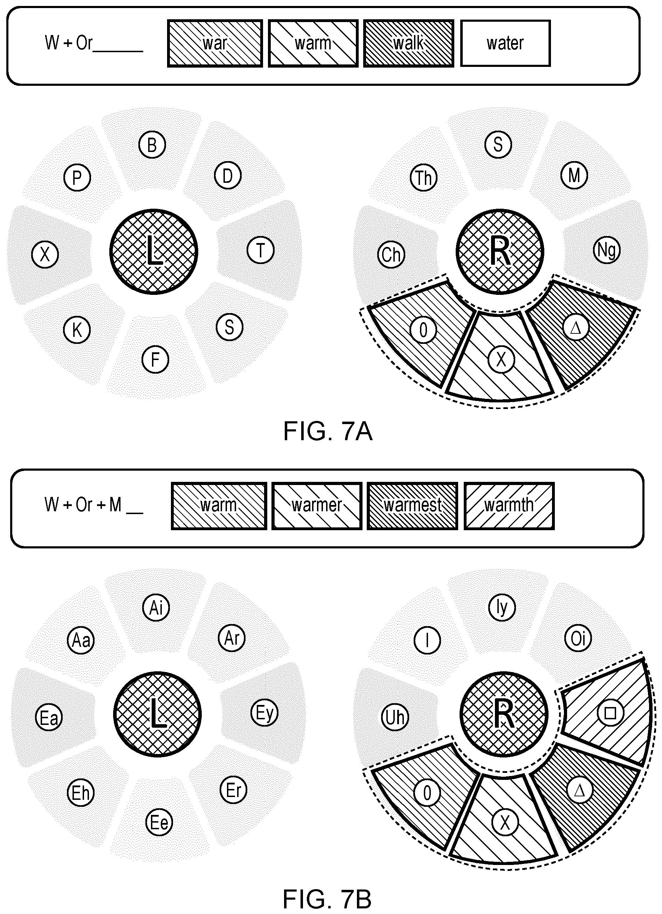

Referring now also to Figures 7A-B, it will be appreciated that a virtual UI of this kind may include syllable and/or word suggestions as the user 'types'. These suggestions may be based on any suitable technique, including based on preceding words and/or syllables in a sequence and the phoneme inputs / skips for the word and/or syllable so far.

In Figure 7A, the user has already selected the phonemes W + Or. This would represent the single syllable word 'war', or alternatively the words 'warm' or 'walk', or could be part of the multi-syllable word 'water', or possibly other words, if the user adds more inputs.

Accordingly, as shown the system can indicate how to select one of the words (or syllables that) is consistent with the phonemes input so far. The words provided for possible selection may be selected according to any suitable scheme, including one or more of frequency, and correlation with one or more preceding words, as per known word prediction schemes.

The words may each be associated with a button on the controller (for example one each of the buttons in group 132R), and/or a respective joystick direction; for example where a section of the joystick UI is for dynamic inputs, this could be used to indicate the word selection. Hence in Figure 7A, the words war, warm, and walk are colour coded (and also optionally a button icon is shown indicating a button that also selects the word). Hence moving the right joystick to the bottom left would select 'war', as would pressing the circle button on the controller. Meanwhile moving that joystick down would select 'warm', as would pressing the 'X' button. Finally, moving the joystick to the bottom-right would select 'walk', as would pressing the triangle button.

If more words or syllables were possible, these could also be shown, and occupy more candidate joystick directions. Alternatively or in addition, use of a 'swap' button as discussed previously could show the next set of candidates for selection. If there are more than a predetermined number of candidates, then alternatively or in addition they system may not show all the selectable options. In this case, the subsequent input of the user (e.g. selection of 'M' or 'K'), will act to filter the candidates down to a smaller number.

Hence for example referring to Figure 7B, the user does not select to complete one of the suggested words / syllables, but instead inputs an 'M'. This eliminates war, walk, and water as options.

'Warm' is still an option despite not being selected at the previous stage, and now the most likely additional candidates may be 'warmer', 'warmest', and 'warmth'.

In this example, optionally all four words are offered for selection in a similar manner to that shown in Figure 7A. Notably this is useful when the current UI does not normally show the relevant next phoneme (for example 'Th' in this case for 'warmth').

Alternatively or in addition, when the user selects space/end, 'Er', or 'Eh', this will disambiguate the four candidates (by indicating one of three of them), and the relevant word can either be selected (e.g. in the case of 'warm' if space or end is input) or suggested as the only candidate in the case of the other words, after which the user can either select space/end or continue to input the phonemes for the word anyway, or to spell a different word. For example, the user might enter 'Ee' and the 'Ng' for 'warming', or skip (to another UI element) and then 'Th' for 'warmth'. Hence it will be appreciated that optionally there may be multiple ways to input a word using some or all of the schemes described herein.

As noted elsewhere herein, optionally some similar homophones may be dropped as input options. Hence as a non-limiting example, in the case of Figures 7A and 7B if 'N' have been omitted as an approximate homophone to 'M', then options for both 'warm' and 'warn' may have been suggested for selection.

It will be appreciated, with reference to the figures, that phonemes may be represented by letters like 'T', or example letter pairs like 'Ee' or 'Ey'. Optionally the phonemes could be represented by the phonetic alphabet, but this is unlikely to be familiar to most users. Hence in practice the UI provides one or more characters representative of a phoneme or of two or more similar phonemes in the case where some homophones are dropped, as described elsewhere herein.

### Summary

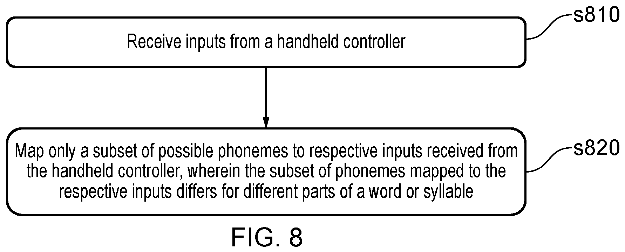

Referring now to Figure 8, in a summary embodiment of the present description a method of identifying an input comprises the following steps.

In a first step s810, receiving (for example at an entertainment device 10) inputs from a handheld controller, as described elsewhere herein.

In a second step s820, mapping only a subset of possible phonemes to respective inputs received from the handheld controller, wherein the subset of phonemes mapped to the respective inputs differs for different parts of a word or syllable, as described elsewhere herein.

It will be apparent to a person skilled in the art that variations in the above method corresponding to operation of the various embodiments of the apparatus as described and claimed herein are considered within the scope of the present invention.

In that regard, it will be appreciated that the methods herein may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring now also to Figure 1, in a summary embodiment of the present description, an input system comprises an entertainment device 10 (for example a videogame console) comprising an input processor (for example CPU 20) configured (for example by suitable software instruction) to receive inputs from a handheld controller, as described elsewhere herein.

The input processor is configured (again for example by suitable software instruction) to map only a subset of possible phonemes to respective inputs received from the handheld controller, as described elsewhere herein.

Meanwhile, the subset of phonemes mapped to the respective inputs differs for different parts of a word or syllable, as described elsewhere herein.

Instances of this summary embodiment implementing the methods and techniques described herein (for example by use of suitable software instruction) are envisaged within the scope of the application, including but not limited to that:
- the subset of phonemes differs according to what part of a current syllable the input will relate to, as described elsewhere herein;
- the subset of phonemes differs responsive to whether the input will relate to one or more selected from the list consisting of syllable onset, nucleus, body, rime, and coda, as described elsewhere herein;
- the subset of syllables is selected responsive to their frequency or probability of occurrence in the current part of a word or syllable, as described elsewhere herein;
   - in this case, optionally the frequency or probability of occurrence is based on words in a corpus, the corpus being corpus representative of one or more selected from the list consisting of text in a language of the user, text related to use of the entertainment system, text related to a current use-case of the user, text related to a current game or game genre and text related to an input history of the user, as described elsewhere herein;
- the mapping of phonemes to respective inputs comprises a first static mapping that remains the same for at least a current part of a word or syllable, in combination with a second dynamic mapping that can change for at least a current part of a specific word or syllable, as described elsewhere herein;
   - in this case, optionally the second dynamic mapping selects one or more phonemes not present in the static mapping, as described elsewhere herein;
   - similarly in this case, optionally the second dynamic mapping selects one or more phonemes responsive to their ability to distinguish between a shortlist of suggested words or syllables, as described elsewhere herein;
   - similarly in this case, optionally the entertainment device generates a graphical user interface for output, the graphical user interface indicating the mapping between the phonemes and the handheld controller inputs, and providing a shortlist of suggested words or syllables responsive to user input, and the entertainment device uses the dynamic mapping to allow selection of one or more shortlisted words or syllables, as described elsewhere herein;
- separate to the mapping of a subset of phonemes to respective inputs of the handheld controller, a mapping to one or more further respective inputs of the handheld controller comprises one or more selected from the list consisting of a delete function, a 'space' character, a phoneme select function, a word select function, a case select function, a subset swap function, a number swap function, and a symbol swap function, as described elsewhere herein;
- the entertainment device generates a graphical user interface for output, the graphical user interface indicating a plurality of mappings between subsets of phonemes and the handheld controller inputs, and switching between mappings responsive to the user's inputs, as described elsewhere herein;
- one or more phonemes in a mapped subset also represent one or more predetermined homophones not in the mapped subset (e.g. close or similar homophones, such as n for m, or b for p, or vice-versa, and the like), as described elsewhere herein; and
- the input system comprises at least one handheld controller, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An input system, comprising:
an entertainment device comprising an input processor configured to receive inputs from a handheld controller; wherein
the input processor is configured to map only a subset of possible phonemes to respective inputs received from the handheld controller; and wherein
the subset of phonemes mapped to the respective inputs differs for different parts of a word or syllable.

2. An input system according to claim 1, in which:
the subset of phonemes differs according to what part of a current syllable the input will relate to.

3. An input system according to claim 1 or claim 2, in which:
the subset of phonemes differs responsive to whether the input will relate to one or more selected from the list consisting of:
i. syllable onset;
ii. syllable nucleus;
iii. syllable body;
iv. syllable rime; and
v. syllable coda.

4. An input system according to any preceding claim, in which
the subset of syllables is selected responsive to their frequency or probability of occurrence in the current part of a word or syllable.

5. An input system according to any preceding claim, in which the mapping of phonemes to respective inputs comprises a first static mapping that remains the same for a current part of a word or syllable, in combination with a second dynamic mapping that can change for a current part of a specific word or syllable.

6. An input system according to claim 5, in which the second dynamic mapping selects one or more phonemes not present in the static mapping.

7. An input system according to any one of claims 5 to 6, in which the second dynamic mapping selects one or more phonemes responsive to their ability to distinguish between a shortlist of suggested words or syllables.

8. An input system according to any one of claims 5 to 7, in which
the entertainment device generates a graphical user interface for output, the graphical user interface indicating the mapping between the phonemes and the handheld controller inputs, and providing a shortlist of suggested words or syllables responsive to user input; wherein
the entertainment device uses the dynamic mapping to allow selection of one or more shortlisted words or syllables.

9. An input system according to any preceding claim, in which
separate to the mapping of a subset of phonemes to respective inputs of the handheld controller, a mapping to one or more further respective inputs of the handheld controller comprises one or more selected from the list consisting of:
i. a delete function;
ii. a 'space' character;
iii. a phoneme select function;
iv. a word select function;
v. a case select function;
vi. a subset swap function;
vii. a number swap function; and
viii. a symbol swap function.

10. An input system according to claim 4, in which the frequency or probability of occurrence is based on words in a corpus, the corpus being corpus representative of one or more selected from the list consisting of:
i. text in a language of the user;
ii. text related to use of the entertainment system;
iii. text related to a current use-case of the user;
iv. text related to a current game or game genre; and
v. text related to an input history of the user.

11. An input system according to any preceding claim, in which
the entertainment device generates a graphical user interface for output, the graphical user interface indicating a plurality of mappings between subsets of phonemes and the handheld controller inputs, and switching between mappings responsive to the user's inputs.

12. An input system according to any preceding claim, in which
one or more phonemes in a mapped subset also represent one or more predetermined homophones not in the mapped subset.

13. An input system according to any preceding claim, further comprising:
the handheld controller.

14. A method identifying an input, comprising:
receiving inputs from a handheld controller; and
mapping only a subset of possible phonemes to respective inputs received from the handheld controller;
the subset of phonemes mapped to the respective inputs differs for different parts of a word or syllable.

15. A computer program comprising computer executable instructions adapted to cause a computer system to perform the method of claim 14.
